**Europäisches Patentamt**

**European Patent Office**

**Office européen des brevets**

(19)

(11) Veröffentlichungsnummer: **0 195 208**

**B1**

(12) # EUROPÄISCHE PATENTSCHRIFT

(45) Veröffentlichungstag der Patentschrift:
27.04.88

(51) Int. Cl.⁴: **F 16 C 29/06,** B 23 Q 1/26

(21) Anmeldenummer: **86101242.5**

(22) Anmeldetag: **31.01.86**

(54) Vorrichtung zur Höheneinstellung eines Wälzlagers für Längsbewegungen.

(30) Priorität: **20.03.85 DE 3509996**

(43) Veröffentlichungstag der Anmeldung:
**24.09.86 Patentblatt 86/39**

(45) Bekanntmachung des Hinweises auf die Patenterteilung:
**27.04.88 Patentblatt 88/17**

(84) Benannte Vertragsstaaten:
**CH DE FR IT LI**

(56) Entgegenhaltungen:
**CH-A-446 823**
**DE-A-1 775 033**
**FR-A-2 544 416**
**GB-A-2 114 251**
**US-A-3 020 097**
**US-A-3 190 703**
**US-A-3 934 946**

(73) Patentinhaber: **INA Wälzlager Schaeffler KG,
Industriestrasse 1-3, D-8522 Herzogenaurach (DE)**

(72) Erfinder: **Lunz, Erich, Fetzelhofen 10, D-8531
Lonnerstadt (DE)**
Erfinder: **Schwinghammer, Reinhard, Dipl.- Ing.
(FH), Hainstrasse 9, D-8501 Tuchenbach (DE)**

(74) Vertreter: **Klug, Horst, Dipl.- Ing. (FH), c/o INA
Wälzlager Schaeffler KG Postfach 12 20, D-8522
Herzogenaurach (DE)**

## Beschreibung

Die Erfindung betrifft eine Vorrichtung zur Höheneinstellung eines Wälzlagers für Längsbewegungen, das aus einem Tragkörper mit zwei geraden, parallel zueinander verlaufenden Laufbahnabschnitten, die an ihren Enden durch halbkreisförmige Umlenkabschnitte miteinander verbunden sind, besteht, der von einem Führungselement umgeben ist, welches Wälzkörper an den vorgenannten Abschnitten des Tragkörpers führt und/oder hält, welches Wälzlager auf zwei relativ zueinander verschiebbaren Einstellkeilen abgestützt ist, deren Keilflächen in Laufbahnlängsrichtung gegensinnig geneigt sind.

Derartige Vorrichtungen zur Höheneinstellung von Wälzlagern für Längsbewegungen sind bereits bekannt. Gegenüber den ebenfalls bekannten Einstellvorrichtungen mit Hilfe eines Exzenters weisen diese Vorrichtungen hinsichtlich der Feineinstellung beträchtliche Vorteile auf. Nachteilig wirkt es sich jedoch aus, daß die Bauhöhe des Wälzlagers durch die Einstellkeile beträchtlich zunimmt, so daß diese Art der Höheneinstellung in vielen Fällen nicht anwendbar ist (CH-A-446 823).

Der Erfindung liegt die Aufgabe zugrunde, diesen Nachteil zu vermeiden und eine Vorrichtung zur Höheneinstellung von solchen Wälzlagern aufzuzeigen, die in einfacher und fortschrittlicher Weise die Vorteile der Feineinstellung mit einer nur relativ geringen Vergrößerung der Bauhöhe in sich vereinigt.

Erfindungsgemäss wird diese Aufgabe dadurch gelöst, daß der Tragkörper das Führungselement quer zur Laufbahnlängsrichtung überragt und die Einstellkeile mit durchgehenden Ausnehmungen versehen sind, in die das Führungselement eingreift, während sich der Tragkörper mit seinen das Führungselement überragenden Zonen auf seitlichen, die Ausnehmungen begrenzenden Rändern der Einstellkeile abstützt.

Mit besonderem Vorteil ist dabei die Ausbildung so getroffen, daß die Gesamthöhe der Einstellkeile nur wenig größer ist als der Teil des Führungselementes, der in die Ausnehmungen der Einstellkeile eingreift. Durch die vorgeschlagene Ausbildung wird eine besonders raumsparende Vortichtung dieser Art geschaffen, die für alle Anwendungsfälle geeignet ist, da sich die Bauhöhe des Wälzlagers nur um das geringe Maß vergrößert, das fur die Freigängigkeit des Führungselementes gegenüber einer Abstützfläche am Gehäuse erforderlich ist.

In weiterer Ausgestaltung der Erfindung wird vorgeschlagen, daß die Länge der durchgehenden Ausnehmungen größer ist als die Länge des Führungselementes. Dadurch ist es nach einer weiteren Ausführungsform der Erfindung möglich, daß die Einstellkeile identisch ausgebildet sind. Durch die vorgesehenen Maßnahmen ergibt sich einerseits das für die Einstellung erforderliche Spiel in Wälzlagerlängsrichtung, andererseits wird die Fertigung der Einstellkeile selbst wesentlich vereinfacht und verbilligt. Ein weiterer Vorteil ist außerdem bei der Montage gegeben, da jede Verwechslungsgefahr bei den Einstellkeilen ausgeschlossen ist.

Nach einer weiteren Ausführungsform der Erfindung ist letztlich vorgesehen, daß die Einstellkeile stirnseitig mit Gewinde- und/oder Durchgangsbohrungen zur Aufnahme von Einstellschrauben versehen sind. Die vorgeschlagene Anordnung ermöglicht es, die Einstellung in einfacher Weise von beiden Stirnseiten aus vorzunehmen, wodurch die Handhabung wesentlich veieinfacht wird.

Ein Ausführungsbeispiel der Erfindung ist in der Zeichnung dargestellt und wird nachfolgend näher beschrieben. Es zeigen:

Fig. 1 einen erfindungsgemäßen Einstellkeil in schaubildlicher Darstellung,

Fig. 2 die erfindungsgemäße Vorrichtung mit eingesetztem Wälzlager in Ansicht und

Fig. 3 einen Schnitt nach der Linie III-III in Fig. 2.

Die Vorrichtung zur Höheneinstellung eines Wälzlagers 1, das aus einem Tragkörper 2 und einem Führungselement 3 besteht, welches Wälzkörper 4 führt und hält, wird aus zwei identischen, relativ zueinander verschiebbaren Einstellkeilen 5 gebildet, deren Keilflächen 6 in Laufbahnlängsrichtung gegensinnig geneigt sind.

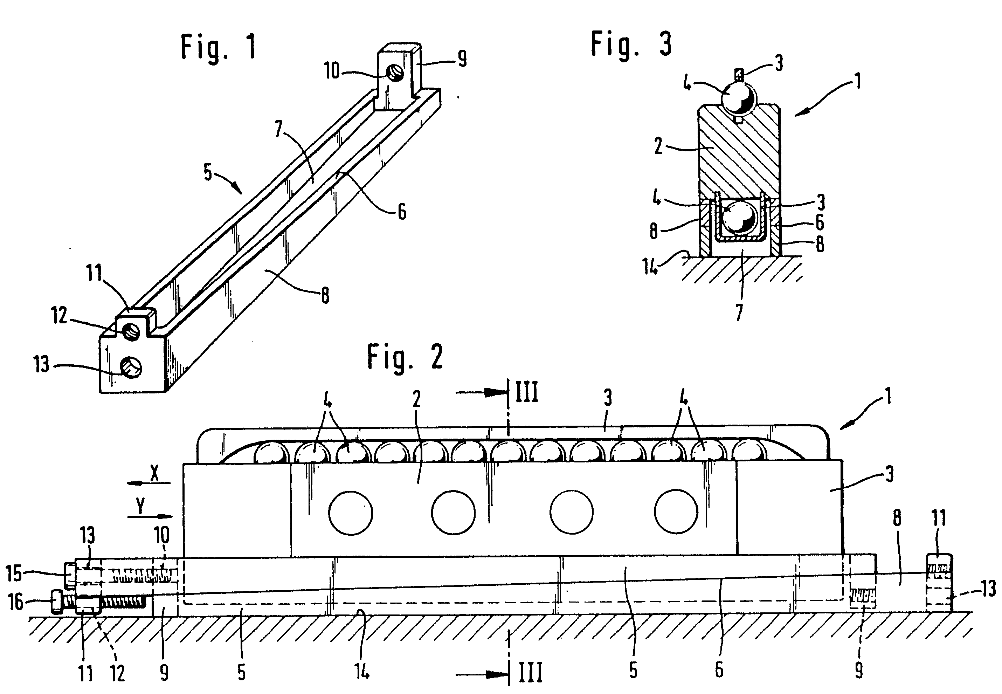

Figur 1 zeigt einen solchen Einstellkeil 5 in schaubildlicher Darstellung, der eine durchgehende Ausnehmung 7 aufweist, die an den Längsseiten von den Rändern 8 begrenzt ist. Der Einstellkeil 5 ist an seiner einen Stirnseite mit einer Nase 9 versehen, die eine Gewindebohrung 10 aufweist, während er an seiner anderen Stirnseite mit einem Vorsprung 11 versehen ist und dort sowohl eine Gewindebohrung 12 als auch eine Durchgangsbohrung 13 besitzt.

Wie die Figuren 2 bzw. 3 zeigen, werden zwei Einstellkeile 5 mit ihren gegensinnig geneigten Keilflächen 6 aufeinandergelegt und das Wälzlager 1 derart in die Ausnehmungen 7 der Einstellkeile 5 eingesetzt, daß das Führungselement 3 in die Ausnehmungen 7 eingreift, während sich der das Führungselement 3 quer zur Laufbahnlängsrichtung überragende Tragkörper 2 mit seinen das Führungselement 3 überragenden Zonen auf den die Ausnehmungen 7 begrenzenden Rändern 8 abstützt. Die Einstellkeile 5 sind dabei in Laufbahnlängsrichtung so zueinander angeordnet, daß das Führungselement 3 mit seiner einen Stirnseite der Nase 9 des einen Einstellkeiles 5 und mit seiner anderen Stirnseite dem Vorsprung 11 des anderen Einstellkeiles 5 gegenüberliegt. Die Höhe der Einstellkeile 5 ist nur wenig größer, als der Teil des Führungselementes 3, der In die Ausnehmungen 7 der Einstellkeile 5 eingreift.

Zur Höheneinstellung des Wälzlagers 1 gegenüber einer nicht dargestellten Laufbahn die Walzkörper 4 stützt sich der untere Einstellkeil 5 aufeiner angedeuteten Abstützfläche 14 ab. Nunmehr wird in die Durchgangsbohrung 13 des einen Einstellkeiles 5, die mit der Gewindebohrung 10 des anderen Einstellkeiles 5 fluchtet, eine Einstellschraube 15 eingeführt und in die Gewindebohrung 10 der Nase 9 des oberen Einstellkeiles 5 eingeschraubt, während in die Gewindebohrung 12 eine Einstellschraube 16 eingeschraubt wird. Das Wälzlager 1 kann dann je nach Bedarf durch Drehen der Einstellschraube 15 in Richtung des Pfeiles X oder durch Drehen der Einstellschraube 16 in Richtung des Pfeiles Y in Längsrichtung so weit verschoben werden, bis die gewünschte Position erreicht ist. Nunmehr wird die Einstellschraube, die nicht zur Einstellung verwendet wurde, so weit angezogen, bis die Keile 5 zum Kontern gegeneinander verklemmt sind.

## Patentansprüche

1. Vorrichtung zur Höheneinstellung eines Wälzlagers (1) für Längsbewegungen, das aus einem Tragkörper (2) mit zwei geraden, parallel zueinander verlaufenden Laufbahnabschnitten, die an Ihren Enden durch halbkreisförmige Umlenkabschnitte miteinander verbunden sind, besteht, der von einem Führungselement (3) umgeben ist, welches Wälzkörper (4) an den vorgenannten Abschnitten des Tragkörpers (2) führt und/oder hält, weiches Wälalager (1) auf zwei relativ zueinander verschiebbaren Einsteilkeilen (5) abgestützt ist, deren Keilflächen (6) in Laufbahnlängsrichtung gegensinnig geneigt sind, dadurch gekennzeichnet, daß der Tragkörper (2) das Führungselement (3) quer zur Laufbahnlängsrichtung überragt und die Einstellkeile (5) mit durchgehenden Ausnehmungen (7) versehen sind, in die das Führungselement (3) eingreift, während sich der Tragkörper (2) mit seinen das Führungselement (3) überragenden Zonen auf seitlichen, die Ausnehmungen (7) begrenzenden Rändern (8) der Einstellkeile (5) abstützt.

2. Vorrichtung nach Anspruch 1, dadurch gekennzeichnet, daß die Gesamthöhe dar Einstellkeile (5) nur wenig größer ist als der Teil des Führungselementes (3), der in die Ausnehmungen (7) der Einstellkeile (5) eingreift.

3. Vorrichtung nach Anspruch 1 oder 2, dadurch gekennzeichnet, daß die Länge der durchgehenden Ausnehmungen (7) größer ist als die Länge des Führungselementes (3).

4. Vorrichtung nach Anspruch 1, 2 oder 3, dadurch gekennzeichnet, daß die Einstellkeile (5) identisch ausgebildet sind.

5. Vorrichtung nach einem der Ansprüche 1 bis 4, dadurch gekennzeichnet, daß die Einstellkeile (5) stirnseitig mit Gewinde- (10, 12) und/oder Durchgangsbohrungen (13) zur Aufnahme von Einsteilschrauben (15, 16) versehen sind.

## Claims

1. Device for the height adjustment of a rolling bearing (1) for linear movements, which consists of a supporting element (2) with two straight track sections running parallel to one another, wich are connected together at their ends by semi-circular turn round sections, the supporting element being embraced by a guide element (3) which guides and/or retains rolling bodies (4) in the said sections of the supporting element (2), the rolling bearing (1) being supported on two relatively displaceable adjusting wedges (5) whose wedge surfaces (6) are oppositely inclined in the longitudinal direction of the track , characterized in that the supporting element (2) projects beyond the guide element (3) transversely to the longitudinal direction of the track and the adjusting wedges (5) are provided with continuous recesses (7) in which the guide element (3) engages, while the supporting element (2) is supported with its zones projecting beyond the guide element (3) on lateral edges (8) of the adjusting wedges (5) bordering the recesses (7).

2. Device according to claim 1, characterized in that the overall height of the adjusting wedges (5) is only slightly greater than the part of the guide element (3) which engages in the recesses (7) of the adjusting wedges (5).

3. Device according to claim 1 or 2, characterized in that the length of the continuous recesses (7) is greater than the length of the guide element (3).

4. Device according to claim 1, 2 or 3, characterized in that the adjusting wedges (5) are identically formed.

5. Device according to one of claims 1 to 4, characterized in that the adjusting wedges (5) are provided at their ends with threaded (10, 12) and/or through bores (13) for reception of adjusting screws (15, 16).

## Revendications

1. Dispositif de réglage de la hauteur d'un palier à roulement (1) pour mouvements linéaires, qui comprend un corps de support (2) comportant deux sections de chemins de roulement rectilignes parallèles qui sont reliées mutuellement à leurs extrémités par des sections de déviation semi-circulaires, qui est entouré par un élément de guidage (3) qui guide et/ou retient des éléments roulants (4) sur les sections précitées du corps de support (2), lequel palier à roulement (1) s'appuie sur deux cales de réglage (5) déplaçables l'une par rapport à l'autre dont les surfaces obliques (6) sont inclinées en sens opposé dans la direction longitudinale du chemin de roulement, caractérisé en ce que le corps de support (2) dépasse de l'élément de guidage (3) perpendiculairement à la direction longitudinale au chemin de roulement et les cales de réglage comportent des évidements continus (7) dans lesquels s'engage l'élément de guidage (3) tandis que le corps de support (2) s'appuie par ses zones dépassant de l'élément de guidage (3) sur des bords latéraux (8) des cales de réglage (5) délimitant les évidements (7).

2. Dispositif suivant la revendication 1, caractérisé en ce que la hauteur totale des cales de réglage (5) est seulement un peu supérieure à la partie de l'élément de guidage (3) qui s'engage dans les évidements (7) des cales de réglage (5).

3. Dispositif suivant la revendication 1 ou 2, caractérisé en ce que la longueur des évidements continus (7) est supérieure à la longueur de l'élément de guidage (3).

4. Dispositif suivant la revendication 1, 2 ou 3, caractérisé en ce que les cales de réglage (5) ont une conformation identique.

5. Dispositif suivant l'une des revendications 1 à 4, caractérisé en ce que les cales de réglage (5) comportent frontalement des alésages taraudés (10, 12) et/ou de passage (13) pour la réception de vis de réglage (15, 16).

Fig. 1

Fig. 3

Fig. 2

0 195 208